Europäisches Patentamt

(19) European Patent Office

Office européen des brevets

(11) Publication number: **0 242 930**
**A2**

(12) # EUROPEAN PATENT APPLICATION

(21) Application number: **87200755.4**

(22) Date of filing: **22.04.87**

(51) Int. Cl.³: **A 01 J 25/12**

(30) Priority: **24.04.86 IT 2022186**

(43) Date of publication of application:
**28.10.87 Bulletin 87/44**

(84) Designated Contracting States:
**AT BE CH DE ES FR GB GR IT LI LU NL SE**

(71) Applicant: **CARDEL S.r.l.**
**Via Milano 32 Frazione Carcano**
**I-22031 Albavilla Province of Como(IT)**

(72) Inventor: **Delgrossi, Carlo**
**Via Mulino, 1**
**I-22040 Anzano del Parco (Como)(IT)**

(74) Representative: **Riccardi, Sergio**
**Riccardi & Co. Via Macedonio Melloni, 32**
**I-20129 Milano(IT)**

(54) **Automatic curd metering device.**

(57) An automatic curd metering device is disclosed, allowing to produce cheese pieces of any geometric shape with uniform quality and doses, substantially comprising an electropneumatic valve opening and closing the delivery passage of the curd feeding tube, actuated by an inductive probe sensing the curd level inside the metering hopper, a curd distributing unit consisting of a carriage moving both longitudinally and transversally the curd feeding tube, an automatic metering head comprising metering cases having the desired shape and provided with an electropneumatic blade or shutter dividing the metering hopper in two parts, and an essembly raising a mould unit from the feeding conveyor to the loading position for the metering cases.

FIG.1

0242930

- 1 -

"AUTOMATIC CURD METERING DEVICE"

The present invention relates to an automatic curd metering device which may be used in factories producing cheese, allowing to make all cheese forms, such as round, oval, square, rectangular, hexagonal pieces and so forth.

Many cheese producers still use old manual systems to feed metered portions of curd to the moulds, by handling manually a feeding tube delivering curd to a foraminous overmould from which curd goes into the underlying moulds. The inconveniences of these manual systems are many and considerable, and may be identified as waste of curd, defective drain of whey, manual distribution of curd in the mould with lack of uniformity and little observance of hygienic rules, formation of unwanted bacterial flora and others.

The working system that may be carried out with the metering device according to the present invention removes all these drawbacks, operates in a fully automatic manner and has the general object to deliver curd from above into an array of moulds arranged close to one another, at the same time draining whey in the desired quantity and manner as well as metering uniformly the desired amount of curd in the mould.

The automatic curd metering device of the invention allows to introduce in the mould modules a predetermined curd volume so as to obtain cheese pieces having identical weight with a tolerance of about 5% on the desired weight.

The automatic curd metering device of the present invention increases output, yields a uniform product of constant quality and avoids product pollution caused by manual handling.

The device of the invention substantially comprises the following elements:

1. Electropneumatic valve opening and closing the delivery passage of the curd feeding tube connecting the milk curdling trough with the curd metering hopper. This electropneumatic valve is automatically actuated by an inductive probe, allowing to keep constant the curd level inside the hopper containing the metering product.

2. Curd distributing unit consisting of a powered carriage alternately moving longitudinally and transversally the curd delivering tube, so as to allow a uniform curd distribution to the metering cases.

3. Automatic metering head, comprising a predetermined number of foraminous cases of square, round, rectangular, hexagonal form and so on, where shape, size and number of said cases is dictated by the product to be handled. The head is provided with an electropneumatic blade, cutting and dividing in two parts the metering hopper, i.e. a lower part consisting of the volumetric cases, where curd is transferred and contained according to the volumetric capacity of the cases, and an upper part consisting of the curd channelling members to the metering cases. The curd entering the cases, after having filled them, goes on rising until it reaches the hopper upper part where it meets the inductive probe sensing the end of the loading cycle. The inductive probe controls closure of the curd delivering electropneumatic valve and of the elctropneumatic shutter dividing the metering hopper. As a consequence of the closure of the shutter of the metering hopper, the product is transferred by gravity from the cases to mould unit.

4. Mould unit raising assembly. This powered assembly raises to the metering cases the mould unit lying on the lower run of the powered feeding chain.

Lifting of the mould unit lasts for the time required to fill the cases and to transfer curd from the cases to mould unit; after having automatically effected this working stage, the mould unit is again laid down on the powered chain, with the consequent positioning of another empty mould unit, ready for being filled with curd.

The above described device is operated by electronic programmed logic, coordinating all the cyclic working stages.

Objects, features and advantages of the automatic curd metering device according to the present invention will be more apparent and clear by examining the accompanying sheets of illustrative drawings of the preferred embodiment not limiting the scope of the invention, in which:

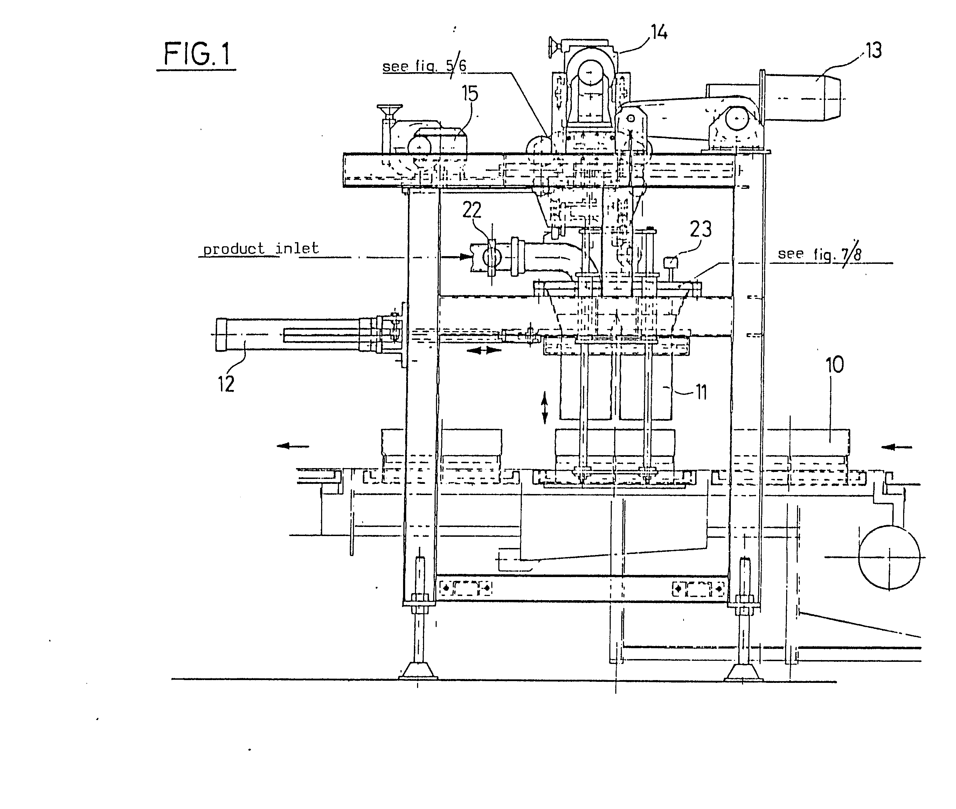

Fig. 1 is a side elevational view of the device;

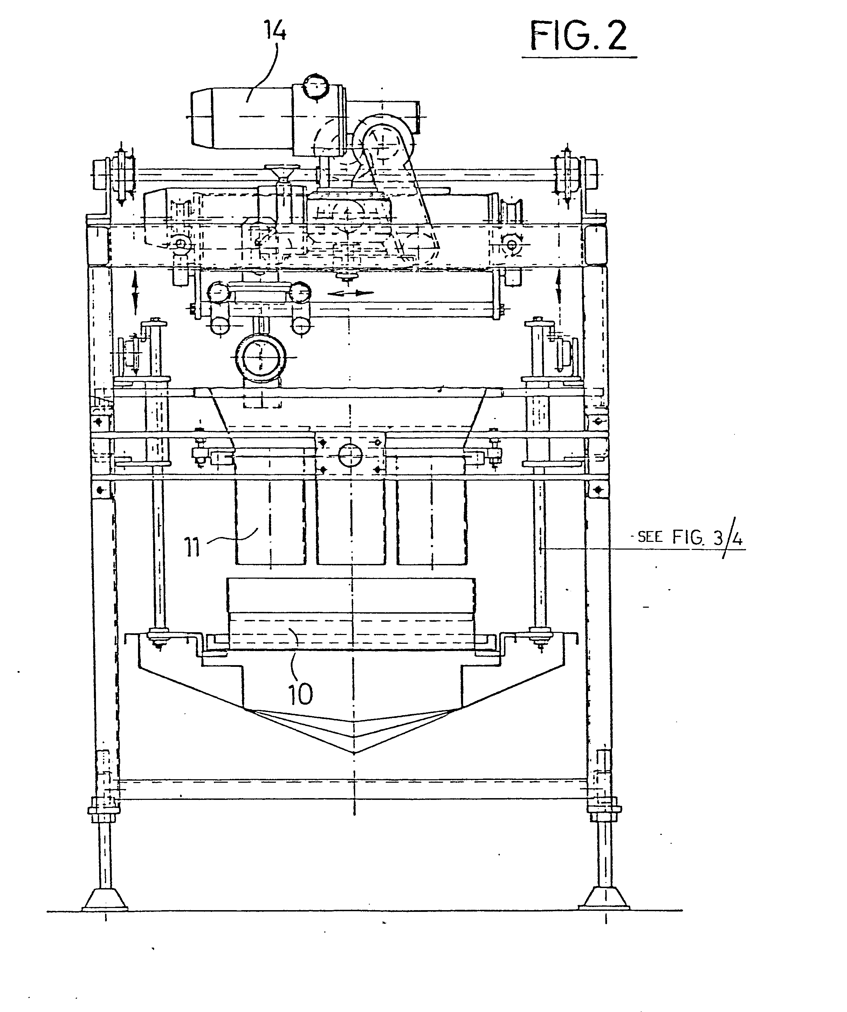

Fig. 2 is a front view of the device;

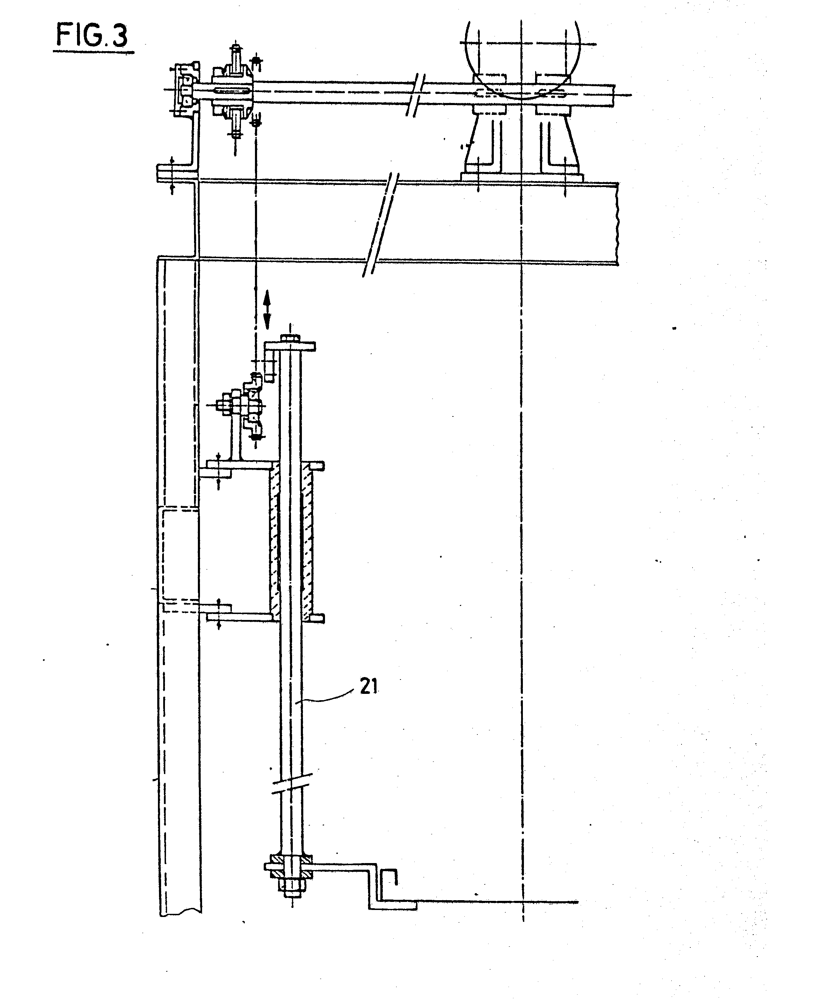

Fig. 3 is a detail of mould unit raising assembly;

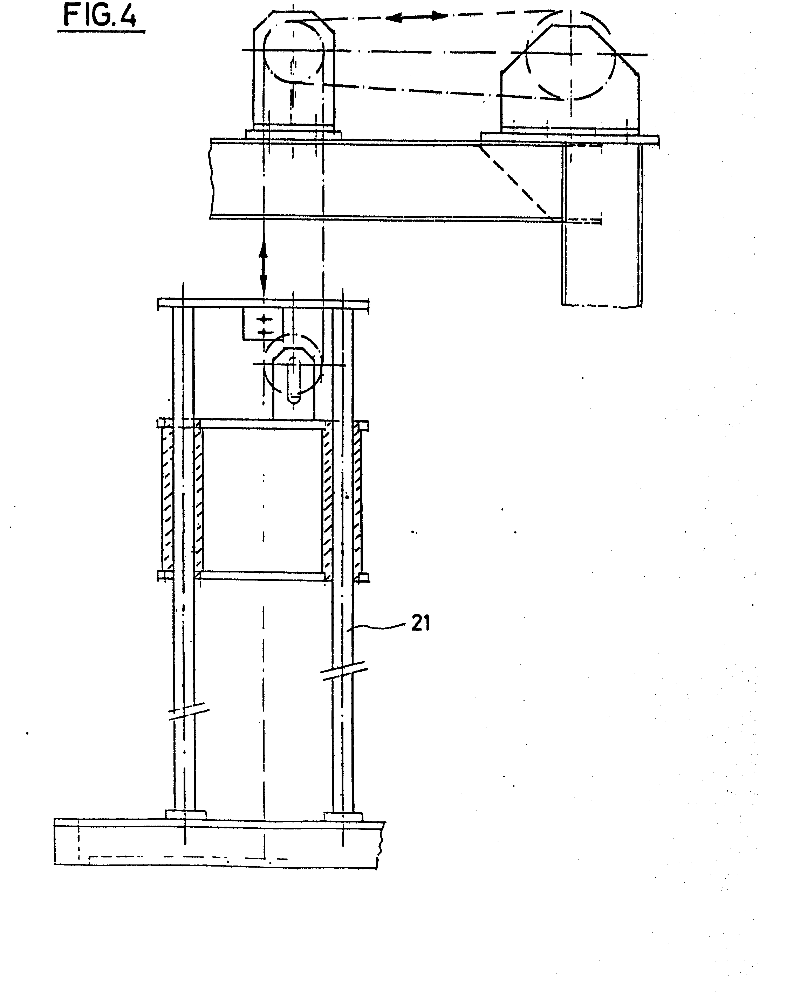

Fig. 4 is another view of the same details of Fig. 3, but turned at 90° in respect of the view of Fig. 3;

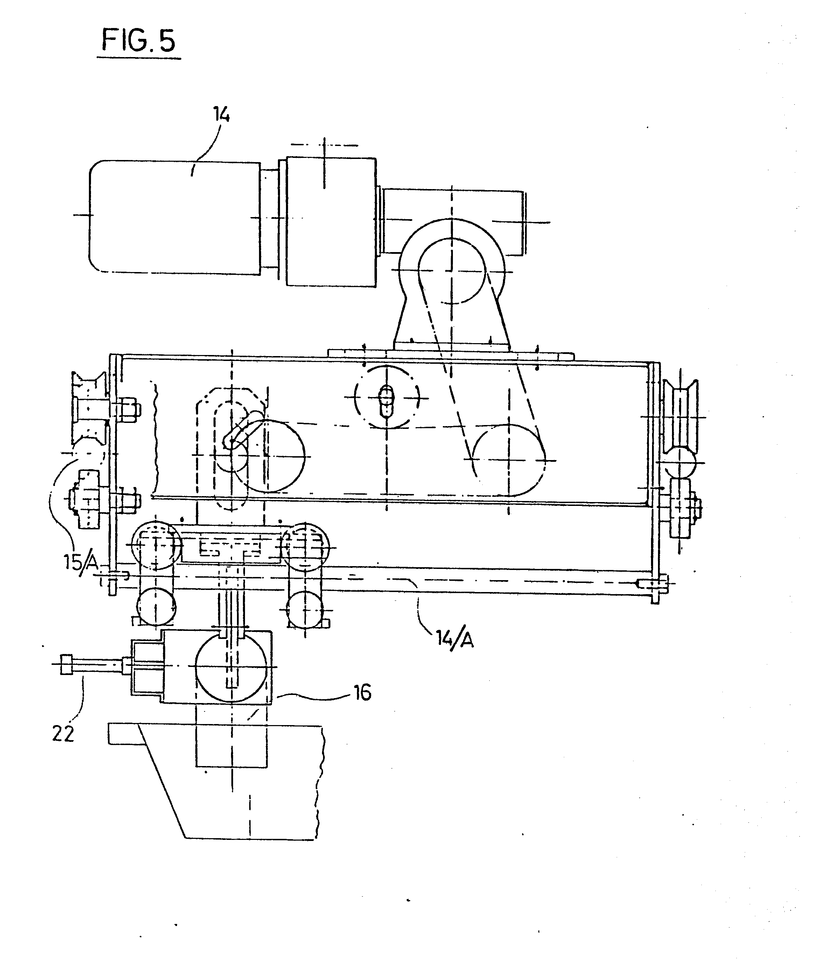

Fig. 5 is a detail of the curd distributor moving unit;

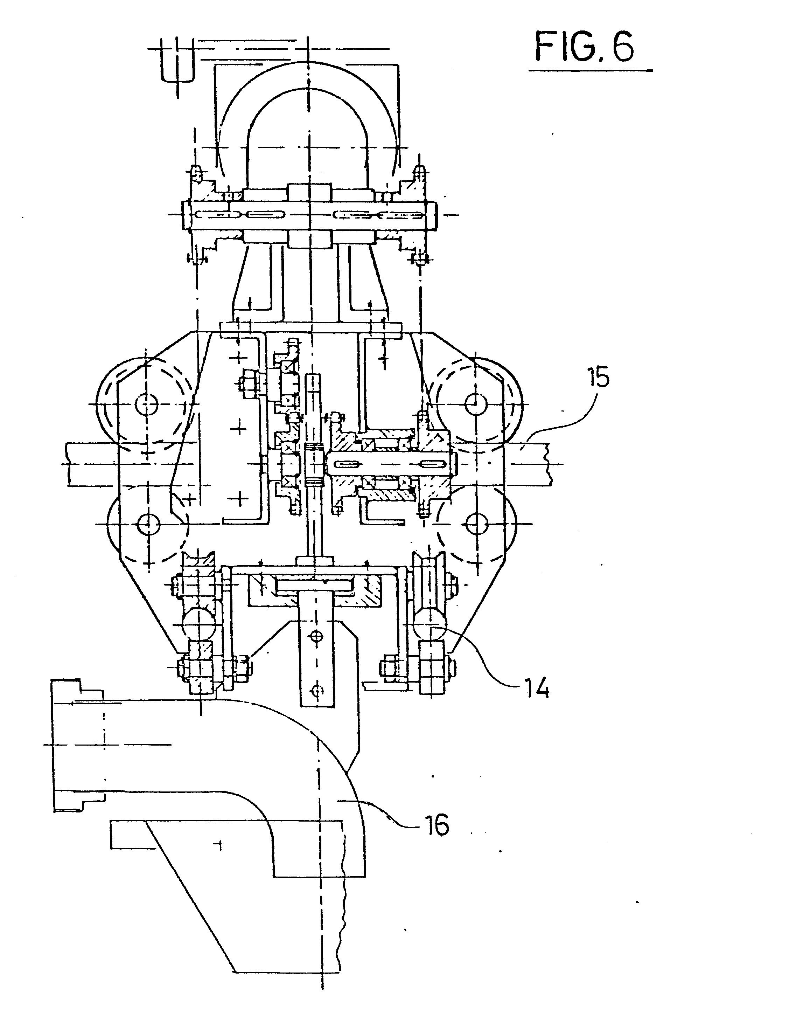

Fig. 6 is another view of the same detail of Fig. 5, but turned at 90° in respect of the view of Fig. 5;

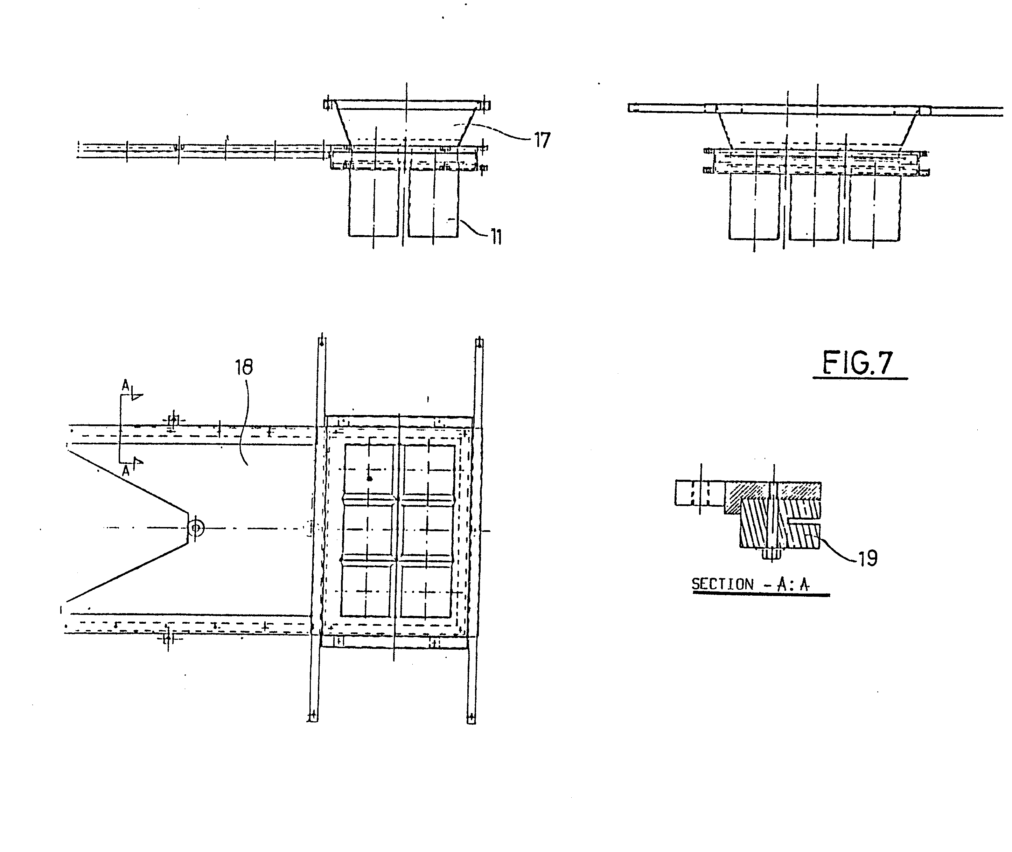

Fig. 7 is a plan, front, side and sectional view of the curd metering hopper;

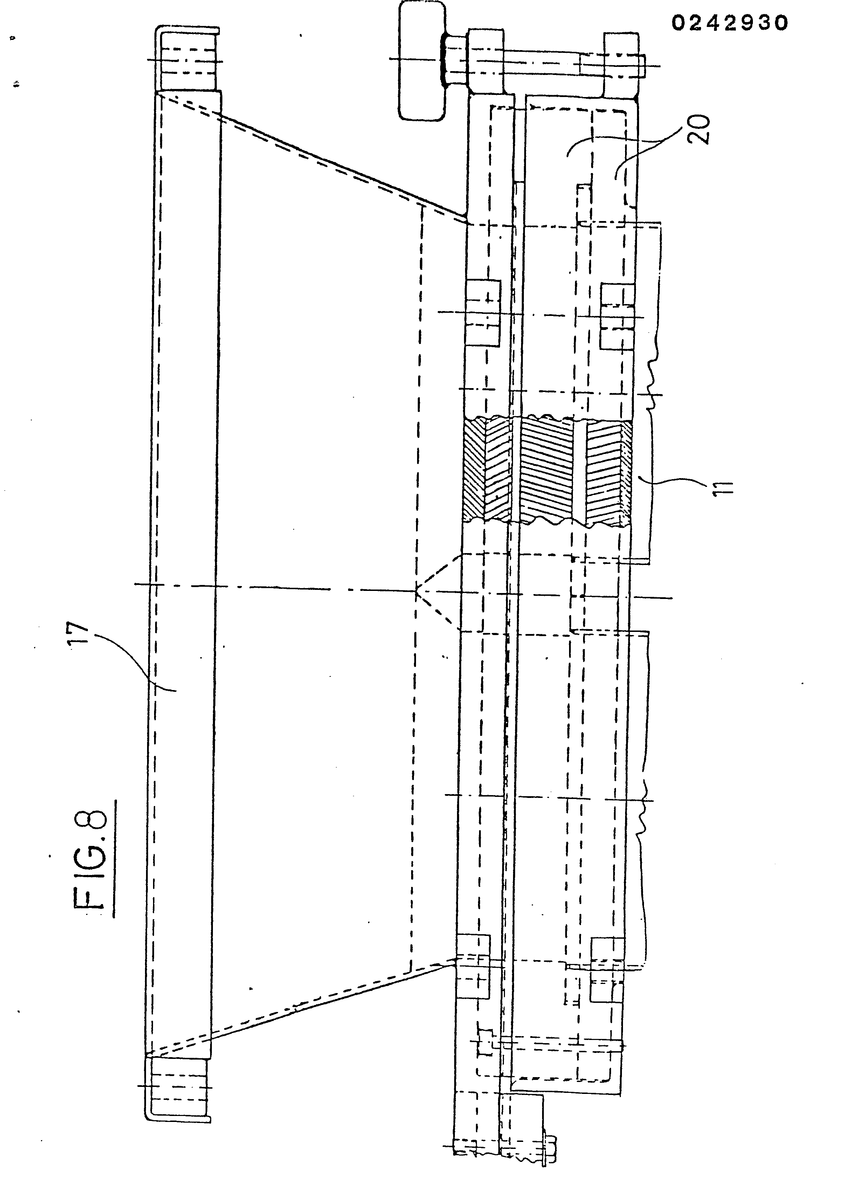

Fig. 8 is a more detailed view of the metering hopper with the interchangeable plates according to the desired cheese shape; and

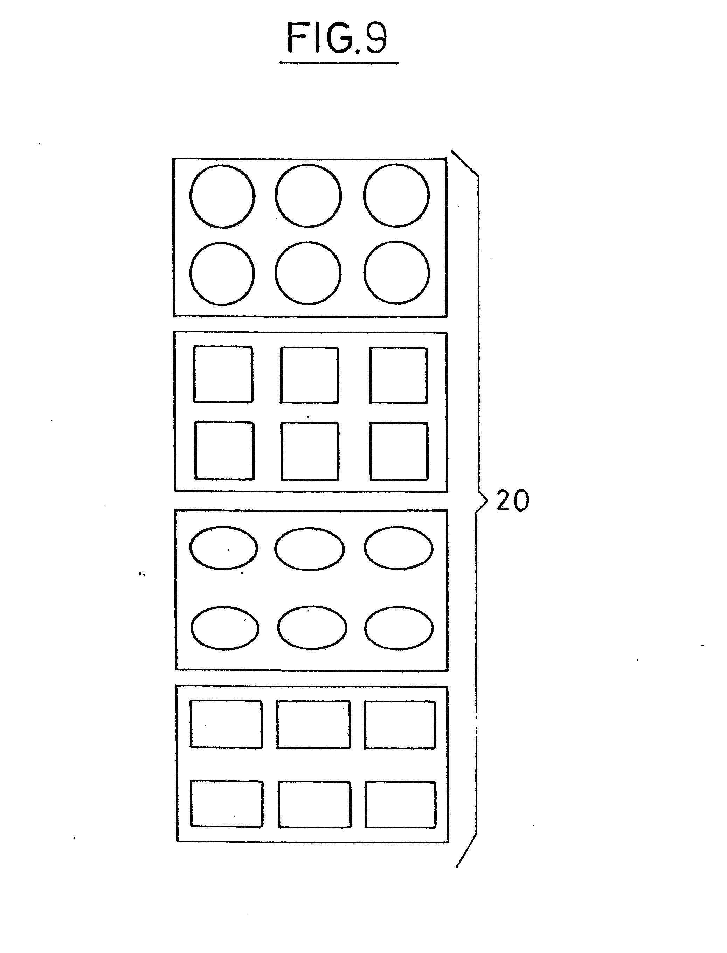

Fig. 9 is a plan view of some examples of said interchangeable plates for the various cheese shapes.

Describing now in greater detail the elements of the device according to the present invention, said device comprises the following main elements:

a) Fixed outer structural frame supporting the whole device.

b) Curd delivery tube with pilot valve, closing and opening the passage of product.

c) Powered curd distributing unit, comprising longitudinal moving means and transversal moving means, combined with forward and backward strokes, for a correct distribution of curd to the cases of the metering unit.

d) Metering hopper comprising an upper container and lower cases, with the possibility of changing said cases as number and shapes according to the pieces to be produced.

e) Electropneumatic shutter dividing the metering hopper into two stages, allowing curd flow from the hopper upper part to the case lower part. Closure of the shutter allows the upper part to hold curd excess and at the same time the lower part to discharge the product contained in the moulds.

f) Probe controlling curd hopper level and loading; this probe opens and closes the metering shutter according to the repetitive cyclic metering process, and moreover controls opening and closure of the electropneumatic valve of the delivery tube according to the need of restoring the curd level inside the metering hopper, required for completing the working operation.

g) Mould unit automatic raising assembly. Such an assembly with two powered brackets allows to raise the mould unit from the lying conveyor to the metering cases for effecting the loading operation; after this loading operation of the mould unit, the two powered brackets lay down the mould unit on the conveyor for unloading it.

With reference now more particularly to the figures of the accompanying drawings, the reference numerals indicated on them are designating the following elements already mentioned in the foregoing paragraphs:

10. Mould unit consisting of tray, mould and overmould.

11. Volumetric curd metering cases. The cases may be of round, square, rectangular and like shape according to the product to be worked.

12. Electropneumatic shutter dividing hopper and metering unit.

13. Motor unit raising the mould unit to automatic metering position.

14. Motor unit for longitudinal transfer of the curd delivering tube with alternative movement in order to obtain a perfectly uniform curd distribution to all the metering cases.

14/A. Guides for moving longitudinally the carriage for the curd delivering tube.

15. Motor unit for transversal transfer of the curd delivering tube combined with the longitudinal movement._

15/A. Guides for moving transversally the carriage for the curd delivering tube.

16. Curd delivery tube connecting the milk curdling trough with the automatic metering hopper 17.

17. Upper hopper containing the excess product in the automatic metering stage.

18. Electropneumatic opening and closure shutter to let curd flow to the volumetric metering cases. When the cases are filled, shutter is closed for transferring curd loaded in the cases to the underlying mould unit.

19. Sliding guides for the electropneumatic shutter.

20. Interchangeable polyethylene plates according to the cheese shape to be handled, such as round, square, rectangular, hexagonal and the like.

21. Mould unit raising assembly for access to the automatic curd metering position.

22. Electropneumatic shutter opening and closing the curd flow arriving from the milk curdling trough for the subsequent feeding to the automatic metering hopper.

23. Inductive probe controlling opening and closure of the electropneumatic shutter for the curd delivery tube and controlling also the electropneumatic shutter for the metering hopper.

It is therefore clear that the automatic curd metering device according to the present invention is a considerable technical development and wholly achieves the stated objects, but it has to be pointed out that many modifications, variations, additions and/or substitutions may be resorted to the several elements of the device, without departing however from spirit and objects of the invention and without falling outside its scope of protection, as it is better defined in the appended claims.

0242930

## CLAIMS

1. Automatic curd metering device comprising curd feeding means and an interchangeable mould unit for making cheese of any geometric shape, characterized by the fact of substantially comprising an electropneumatic valve for opening and closing the delivery passage of said curd feeding means, said valve being actuated by an inductive probe controlling the curd level inside the metering hopper, a curd distributing unit consisting of a carriage moving both longitudinally and transversally the curd delivering means, an automatic metering head consisting of metering cases having the desired cheese shape and provided with an electropneumatic blade dividing the metering hopper in two parts, and a mould unit raising assembly, lifting the mould unit from the feeding conveyor to the loading position of the metering cases.

2. Automatic curd metering device according to Claim 1, characterized in that the inductive probe controls, besides the electropneumatic valve of the curd delivery means, also the electropneumatic blade or shutter dividing the metering hopper in two parts.

3. Automatic curd metering device according to Claim 2, characterized in that the metering hopper or head consists of an upper channelling member for feeding curd to the lower part consisting of the interchangeable metering cases.

4. Automatic curd metering device according to Claim 1, characterized in that the mould unit raising assembly comprises two powered brackets lifting said mould unit for its loading and then laying it down for its discharge.

5. Automatic curd metering device according to Claim 1, characterized in that the mould unit comprises tray, mould and overmould.

6. Automatic curd metering device according to Claim 1, characterized in that the carriage moving the curd delivering means is controlled by two separate motors, the one for the longitudinal movement and the other for the transversal movement, said carriage movements being effected on corresponding guides consisting of sliding bars for the grooved casters of the carriage.

7. Automatic curd metering device, substantially as hereinbefore described and shown as illustrative example in the annexed sheets of drawings, for the above mentioned objects.

FIG.1

see fig. 7/8

see fig. 5/6

product inlet

10

11

12

13

14

15

22

23

0242930

FIG.2

SEE FIG. 3/4

0242

FIG.3

21

0242930

FIG.4

21

FIG.5

14

15/A

14/A

16

22

0242930

## FIG. 6

15

14

16

FIG.7

17

11

18

A

A

19

SECTION - A:A

7/9

0242930

FIG.8

0242930

# FIG.9

20